(19) Europäisches Patentamt / European Patent Office / Office européen des brevets

(11) **EP 2 412 436 A1**

(12) **EUROPEAN PATENT APPLICATION**
published in accordance with Art. 153(4) EPC

(43) Date of publication:
 **01.02.2012 Bulletin 2012/05**

(51) Int Cl.:
 *B01J 21/18* (2006.01)      *C25B 11/06* (2006.01)
 *H01M 4/88* (2006.01)      *H01M 4/90* (2006.01)
 *H01M 8/10* (2006.01)

(21) Application number: **10756264.7**

(22) Date of filing: **23.03.2010**

(86) International application number:
 **PCT/JP2010/055491**

(87) International publication number:
 **WO 2010/110469 (30.09.2010 Gazette 2010/39)**

(84) Designated Contracting States:
 **AT BE BG CH CY CZ DE DK EE ES FI FR GB GR
 HR HU IE IS IT LI LT LU LV MC MK MT NL NO PL
 PT RO SE SI SK SM TR**

(30) Priority: **27.03.2009 JP 2009078937**

(71) Applicant: **Sumitomo Chemical Company, Limited
 Tokyo 104-8260 (JP)**

(72) Inventors:
 • **HATTORI, Takeshi
  Abiko-shi
  Chiba 270-1175 (JP)**
 • **ITO, Yutaka
  Tsukuba-shi
  Ibaraki 305-0005 (JP)**
 • **MAKI, Hajime
  Tsukuba-shi
  Ibaraki 305-0051 (JP)**

(74) Representative: **Brunetti, Fabrizio et al
 Cabinet Beau de Loménie
 158, rue de l'Université
 75340 Paris Cedex 07 (FR)**

(54) **METHOD FOR PRODUCING ELECTRODE CATALYST, AND ELECTRODE CATALYST**

(57)   A method for producing an electrode catalyst, comprising a step of calcining a precursor of the electrode catalyst under conditions under which a second material defined below can change into a carbonaceous material, the precursor having been obtained by hydrothermally reacting a mixture containing a first material defined below and the second material defined below in the presence of supercritical or subcritical water, or the precursor having been obtained by mixing a reaction product having been obtained by hydrothermally reacting a first material defined below in the presence of supercritical or subcritical water and the second material defined below,
wherein
the first material is defined to be a metal compound composed of one or more metal elements selected from the group consisting of the elements of Group 4A and the elements of Group 5A and one or more non-metal elements selected from the group consisting of hydrogen, nitrogen, chlorine, carbon, boron, sulfur, and oxygen, and the second material is defined to be a precursor of a carbonaceous material.

Fig.2

EP 2 412 436 A1

**Description**

**TECHNICAL FIEID**

The present invention relates to a method for producing an electrode catalyst and also to an electrode catalyst.

**BACKGROUND ART**

An electrode catalyst is a solid catalyst to be supported on an electrode (particularly on the surface.region of an electrode), and has been used for the electrolysis of water, the electrolysis of an organic matter, and the electrochemical system of fuel cells, for example. As an electrode catalyst for use in an acidic electrolyte, a noble metal can be mentioned. Among noble metals, platinum is particularly stable in an acidic electrolyte even at high potential, and thus has been widely used.

However, platinum is expensive, and its resources are limited. Accordingly, there is a demand for an electrode catalyst made of a material which is relatively inexpensive and whose resources are relatively abundant.

As an electrode catalyst that is relatively inexpensive and can be used in an acidic electrolyte, tungsten carbide is known (see Non-patent Document 1 below). Further, as an electrode catalyst that is hardly soluble when used at high potential, an electrode catalyst made of zirconium oxide is known (see Non-patent Document 2 below).

Non-patent Document 1: Hiroshi Yoneyama et al., "Denkikagaku (Electrochemistry)" Vol. 41, page 719 (1973)
Non-patent Document 2: Yan Liu et al., "Electrochemical and Solid-State Letters" 8 (8), 2005, A400 to 402

**DISCLOSURE OF THE INVENTION**

The electrode catalyst made of tungsten carbide mentioned above has a problem that it dissolves at high potential. Meanwhile, with respect to the electrode catalyst made of zirconium oxide, the current value that can be drawn is small. These electrode catalysts are, therefore, not sufficiently durable for use as electrode catalysts. An object of the present invention is to provide a highly active electrode catalyst that can be obtained using a material which is relatively inexpensive and whose resources are relatively abundant, and can also be used in an acidic electrolyte even at high potential; and a method for producing the same.

That is, the present invention provides the followings.

<1> A method for producing an electrode catalyst, including a step of calcining a precursor of the electrode catalyst under conditions under which a second material defined below can change into a carbonaceous material, the precursor having been obtained by hydrothermally reacting a mixture containing a first material defined below and the second material defined below in the presence of supercritical or subcritical water, wherein
the first material is defined to be a metal compound composed of one or more metal elements selected from the group consisting of the elements of Group 4A and the elements of Group 5A and one or more non-metal elements selected from the group consisting of hydrogen, nitrogen, chlorine, carbon, boron, sulfur, and oxygen, and
the second material is defined to be a precursor of a carbonaceous material.

<2> A method for producing an electrode catalyst, including a step of calcining a precursor of the electrode catalyst under conditions under which a second material defined below can change into a carbonaceous material, the precursor having been obtained by mixing a reaction product having been obtained by hydrothermally reacting a first material defined below in the presence of supercritical or subcritical water and the second material defined below, wherein
the first material is defined to be a metal compound composed of one or more metal elements selected from the group consisting of the elements of Group 4A and the elements of Group 5A and one or more non-metal elements selected from the group consisting of hydrogen, nitrogen, chlorine, carbon, boron, sulfur, and oxygen, and
the second material is defined to be a precursor of a carbonaceous material.

<3> The method according to <1> or <2>, wherein the metal element in the first material is Zr or Ti.

<4> The method according to any one of <1> to <3>, wherein an atmosphere of the calcination is an oxygen-free atmosphere.

<5> An electrode catalyst obtained by the method according to any one of <1> to <4>.

<6> An electrode catalyst composed of a metal compound containing titanium and oxygen and a carbonaceous material coating at least a part of a surface of the compound and having a BET specific surface area of 15 $m^2/g$ or more and 500 $m^2/g$ or less.

<7> The electrode catalyst according to <6>, wherein the metal compound containing titanium and oxygen is a titanium oxide.

<8> An electrode catalyst composition containing the electrode catalyst according to any one of <5> to <7>.

**BRIEF DESCRIPTION OF THE DRAWINGS**

Fig. 1 shows the powder X-ray diffraction pattern of an embodiment of the first material of the present invention.
Fig. 2 shows the powder X-ray diffraction pattern of an embodiment of the electrode catalyst of the present invention.

**MODE FOR CARRYING OUT THE INVENTION**

(First Invention)

The method for producing an electrode catalyst of the invention includes a step of calcining a precursor of an electrode catalyst under conditions under which a second material defined below can change into a carbonaceous material, the precursor having been obtained by hydrothermally reacting a mixture containing a first material defined below and the second material defined below in the presence of supercritical or subcritical water.
Here, the first material is defined to be a metal compound composed of one or more metal elements selected from the group consisting of the elements of Group 4A and the elements of Group 5A and one or more non-metal elements selected from the group consisting of hydrogen, nitrogen, chlorine, carbon, boron, sulfur, and oxygen, and the second material is defined to be a precursor of a carbonaceous material.

(Second Invention)

The method for producing an electrode catalyst of the invention includes a step of calcining a precursor of the electrode catalyst under conditions under which a second material defined below can change into a carbonaceous material, the precursor having been obtained by mixing a reaction product having been obtained by hydrothermally reacting a first material defined below in the presence of supercritical or subcritical water and the second material defined below.
Here, the first material is defined to be a metal compound composed of one or more metal elements selected from the group consisting of the elements of Group 4A and the elements of Group 5A and one or more non-metal elements selected from the group consisting of hydrogen, nitrogen, chlorine, carbon, boron, sulfur, and oxygen, and the second material is defined to be a precursor of a carbonaceous material.
According to the present invention mentioned above, an electrode catalyst can be obtained using a material which is relatively inexpensive and whose resources are relatively abundant. Also, an electrode catalyst that shows relatively high activity in an acidic electrolyte even at a relatively high potential, such as 0.4 V or more, can be obtained.
The first material used in the method of the present invention is a metal compound composed of one or more metal elements selected from the group consisting of the elements of Group 9A and the elements of Group 5A and one or more non-metal elements selected from the group consisting of hydrogen, nitrogen, chlorine, carbon, boron, sulfur, and oxygen. The metal element in the metal compound as the first material is preferably a metal element of the elements of Group 4A or a metal element of the elements of Group 5A, more preferably Zr, Ti, Ta, or Nb, still more preferably Zr or Ti, and particularly preferably Ti. Further, the non-metal element in the metal compound is preferably one or more non-metal elements selected from among hydrogen, chlorine, and oxygen. Examples of metal compounds in the case where the metal element is Zr include zirconium hydroxide and zirconium oxychloride. Examples of metal compounds in the case where the metal element is Ti include titanium hydroxide, titanium tetrachloride, metatitanic acid, orthotitanic acid, titanium sulfate, and titanium alkoxide.
The second material used in the method of the present invention is a precursor of a carbonaceous material. The precursor of a carbonaceous material can change into a carbonaceous material by calcination. Examples of the precursor of a carbonaceous material include saccharides, such as glucose, fructose, sucrose, cellulose, and hydroxypropyl cellulose; alcohols, such as polyvinyl alcohol; glycols, such as polyethylene glycol and polypropylene glycol; polyesters, such as polyethylene terephthalate; nitriles, such as acrylonitrile and polyacrylonitrile; various proteins, such as collagen, keratin, ferritin, hormone, hemoglobin, and albumin; biological materials such as amino acids including glycine, alanine, methionine, and the like; as well as ascorbic acid, citric acid, and stearic acid.
In the first invention mentioned above, a mixture containing the first material and the second material is hydrothermally reacted in the presence of supercritical or subcritical water to give a precursor of an electrode catalyst. Further, in the second invention mentioned above, a reaction product having been obtained by hydrothermally reacting the first material in the presence of supercritical or subcritical water is mixed with the second material to give a precursor of an electrode catalyst. For the mixing, a commonly used industrial apparatus, such as a ball mill, a V-shaped mixer, or a stirrer, can be used. Here, the mixing may be dry mixing or wet mixing. Further, after wet mixing, drying may be performed at a temperature that will not cause the decomposition of the precursor of a carbonaceous material.

Besides, the supercritical point of water is 374°C at 22 MPa. In the present invention, supercritical water refers to water under the conditions of a temperature of 374°C or more, and the pressure is preferably 22 MPa or more. Further, in the present invention, subcritical water refers to water under the conditions of a temperature of 250°C or more, and the pressure is preferably 20 MPa or more. Further, in the present invention, as a reactor for carrying out the hydrothermal reaction, a batch reactor or a continuous (flow) reactor can be used. Explanations will be given hereinafter, taking a batch reactor as an example. An aqueous solution or a slurry is placed in a reaction vessel, and the reaction vessel is hermetically sealed, maintained at a prescribed temperature for a prescribed period of time, and then cooled, followed by recovering the resulting product in the vessel. The reaction vessel may be selected from those having configurations and materials with sufficient heat resistance against the prescribed temperature, sufficient pressure resistance against the pressure during the reaction, and sufficient corrosion resistance against the aqueous solution or the slurry used, an intermediate, and the product. Materials for the reaction vessel may be suitably selected depending on the conditions of the kind of aqueous solution or slurry, the reaction temperature, the pressure, and the like. Examples thereof include stainless steels, such as SUS316; nickel alloys, such as Hastelloy and Inconel; and titanium alloys. Further, the inner surface of the vessel may be lined with a highly corrosion-resistant material, such as gold. In order to achieve the maintenance of the prescribed temperature, an electric furnace can be used, for example. In this case, the electric furnace may be configured to allow a reaction vessel to be inserted into the heating portion of the electric furnace so as to facilitate operations such as the installation and removal of the reaction vessel. Further, at the time of raising the temperature or maintaining the prescribed temperature, the reaction vessel may be shaken in terms of keeping the uniformity of the contents.

Depending on the prescribed temperature, the amount of the aqueous solution or the slurry to be placed in the reaction vessel can be adjusted to control the pressure inside the reaction vessel during the hydrothermal reaction. An example of a method for cooling the reaction vessel after maintenance for a prescribed period of time includes a rapid cooling technique by immersing the whole reaction vessel in water. As a method for recovering the product, the slurry contained in the vessel may be subjected to solid-liquid separation, then washed, dried, and recovered in the form of a powder, or it may also be recovered in the form of a slurry.

As a result of the calcination of the precursor of an electrode catalyst under the conditions under which the second material can change into a carbonaceous material, the electrode catalyst in the present invention is obtained. An atmosphere of the calcination is preferably an oxygen-free atmosphere for the efficient synthesis of the electrode catalyst. In terms of cost, the oxygen-free atmosphere is preferably a nitrogen atmosphere. A furnace used for the calcination may be a furnace capable of controlling the atmosphere, and examples thereof include tubular electric furnaces, tunnel furnaces, far-infrared furnaces, microwave heating furnaces, roller hearth furnaces, and rotary furnaces. The calcination may be performed in a batch process or in a continuous process. Further, the calcination may be performed in a static manner in which the precursor of an electrode catalyst is calcined while the precursor stands still, or it may also be performed in a fluid manner in which the precursor of an electrode catalyst is calcined while the precursor is in a fluid state.

The calcination temperature may be suitably determined in consideration of the kind of the precursor of a carbonaceous material and the kind of the calcination atmosphere, and it may be a temperature at which the precursor of a carbonaceous material can change into a carbonaceous material, i.e., a temperature at which the precursor of a carbonaceous material is decomposed and carbonized. Examples of the calcination temperature include specifically 400°C to 1100°C, preferably 500°C to 1000°C, more preferably 500°C to 900°C, and still more preferably 700°C to 900°C. The BET specific surface area of the electrode catalyst can be adjusted by controlling the calcination temperature. Besides, in the present invention, the conditions under which the second material can change into a carbonaceous material refers to the conditions under which the second material can be decomposed and thus carbonized into a carbonaceous material.

The temperature rise rate during calcination is not particularly limited as long as it is within a practical range, and is usually 10°C/hour to 600°C/hour, and preferably 50°C/hour to 500°C/hour. The temperature may be raised to the calcination temperature at such a temperature rise rate, and maintained for 0.1 hours to 24 hours, preferably about 1 hour to about 12 hours, to carry out calcination.

The carbon content of the electrode catalyst in the present invention is 0.1 mass% or more and 50 mass% or less, more preferably 0.5 mass% or more and 45 mass% or less, still more preferably 3 mass% or more and 40 mass% or less, and particularly preferably 15 mass% or more and 35 mass% or less. In the present invention, an Ig-loss value is used as a carbon content. Specifically, the value of carbon content, which is calculated by the following formula when an electrode catalyst is placed in an alumina crucible and calcined in ambient atmosphere at 1000°C for 3 hours, is used.

$$\text{Carbon content (mass\%)} = (W_I - W_A)/W_I \times 100$$

(wherein $W_I$ is the mass of electrode catalyst before calcination, and $W_A$ is the mass thereof after calcination.)

The electrode catalyst obtained by the method of the present invention mentioned above is an electrode catalyst that can be used in an acidic electrolyte even at high potential, and can show high activity.

In the present invention, the electrode catalyst has a BET specific surface area of preferably 15 m$^2$/g or more and 500 m$^2$/g or less, and more preferably 50 m$^2$/g or more and 300 m$^2$/g or less. When the BET specific surface area is set like this, higher activity can be achieved.

In the present invention, the carbon coverage on the electrode catalyst determined by the following formula (1) is preferably 0.05 or more and 0.5 or less, and more preferably 0.1 or more and 0.3 or less.

$$\text{Carbon coverage} = \text{Carbon content (mass\%)}/\text{BET specific surface area (m}^2\text{/g)} \qquad (1)$$

In the present invention, in order to accelerate an electrode reaction, the work function value of the electrode catalyst is preferably 2 eV or more and 6 eV or less, and more preferably 3 eV or more and 5 eV or less. As the work function value, the energy value at the time of current detection may be used, which is obtained by measurement using a photoelectron spectrometer "AC-2" (manufactured by Riken Keiki Co., Ltd.) under the conditions of actinography at 500 nW and a measurement energy of 4.2 eV to 6.2 eV.

Further, the present invention provides an electrode catalyst composed of a metal compound containing titanium and oxygen and a carbonaceous material coating at least a part of the surface of the compound and having a BET specific surface area of 15 m$^2$/g or more and 500 m$^2$/g or less. Use of the electrode catalyst as an electrode catalyst in an electrochemical system makes it possible to draw a higher oxygen reduction current. Further, resources of titanium are abundant, and this is advantageous in spreading electrochemical systems of fuel cells and the like, increasing their size, etc. The BET specific surface area in the electrode catalyst is preferably 50 m$^2$/g or more and 300 m$^2$/g or less. Further, as a metal compound containing titanium and oxygen, titanium oxides are preferable, and tetragonal (anatase) titanium oxide is more preferable. Further, the electrode catalyst can be obtained by using Ti as a metal element in the metal compound in the first invention or the second invention mentioned above. Further, it may also be obtained by a method other than the above method.

The electrode catalyst composition of the present invention contains the electrode catalyst of the present invention mentioned above. The electrode catalyst composition usually contains a dispersion medium. The electrode catalyst composition can be obtained by dispersing the electrode catalyst in the dispersion medium. Examples of the dispersion medium include alcohols, such as methanol, ethanol, isopropanol, and n-propanol; and water, such as ion-exchange water.

In dispersion, a dispersant may be used. Examples of the dispersant include inorganic acids, such as nitric acid, hydrochloric acid, and sulfuric acid; organic acids, such as oxalic acid, citric acid, acetic acid, malic acid, and lactic acid; watersoluble zirconium salts, such as zirconium oxychloride; surfactants, such as ammonium polycarboxylate and sodium polycarboxylate; and catechins, such as epicatechin, epigallocatechin, and epigallocatechin gallate.

The electrode catalyst composition of the present invention may contain an ion-exchange resin. When an ion-exchange resin is contained, such an electrode catalyst composition is particularly suitable for fuel cells. Examples of the ion-exchange resin include cation-exchange resins, such as fluorine-based ion-exchange resins including Nafion (registered trademark of Du Pont); and hydrocarbon-based ion-exchange resins including sulfonated phenol formaldehyde resins.

The electrode catalyst composition of the present invention may contain an electrically conductive material. Examples of the electrically conductive material include carbon fibers, carbon nanotubes, carbon nanofibers, electrically conductive oxides, electrically conductive oxide fibers, and electrically conductive resins. Further, the electrode catalyst composition of the present invention may also contain noble metals, such as Pt and Ru; and transition metals, such as Ni, Fe, and Co. In the case where these noble metals and transition metals are contained, it is preferable that their contents be extremely low (e.g., around from 0.1 parts by mass to 10 parts by mass relative to 100 parts by mass of the electrode catalyst).

The electrode catalyst of the present invention can be used in an electrochemical system, and can be used preferably as an electrode catalyst for fuel cells, more preferably as an electrode catalyst for polymer electrolyte fuel cells, and still more preferably as an electrode catalyst in the cathode part of a polymer electrolyte fuel cell.

The electrode catalyst in the present invention is suitable for use in an acidic electrolyte at a potential of 0.4 V or more relative to the reversible hydrogen electrode potential, and has relatively high activity. Therefore, in an electrochemical system, for example, the electrode catalyst is useful as an oxygen reduction catalyst to be supported on an electrode and used for reducing oxygen. In the case where it is used as an oxygen reduction catalyst, the preferred upper limit of potential depends on the stability of the electrode catalyst, and it can be used up to a potential of about 1.6 V, at which oxygen is generated. When the potential exceeds 1.6 V, the electrode catalyst is gradually oxidized from the surface at the same time as the generation of oxygen, whereby the electrode catalyst may be completely oxidized and inactivated. A potential of less than 0.4 V could be suitable in terms of the stability of the electrode catalyst. However, in terms of being an oxygen reduction catalyst, the usefulness thereof may be poor.

The electrode catalyst composition of the present invention may also be supported on an electrode, such as a carbon cloth or carbon paper, and used in the electrolysis of water, the electrolysis of an organic matter, or the like in an acidic electrolyse. Further, it may also be supported on an electrode that forms a fuel cell, such as a polymer electrolyte fuel cell or a phosphoric acid fuel cell, and used.

**EXAMPLES**

Hereinafter, the present invention will be described in further detail with reference to examples. However, the invention is not limited to these examples.

Besides, evaluation methods in each example are as follows.

(1) BET specific surface area ($m^2/g$) was determined by the nitrogen adsorption method.
(2) Crystal structure was determined using a powder X-ray diffractometer.
(3) As a carbon content, the value of carbon content (Ig-loss value), which was calculated by the following formula when an electrode catalyst obtained was placed in an alumina crucible and calcined in a box furnace in ambient atmosphere at 1000°C for 3 hours, was used.

$$\text{Carbon content (mass\%)} = (W_I - W_A)/W_I \times 100$$

(wherein $W_I$ is the mass of electrode catalyst before calcination, and $W_A$ is the mass after calcination.)
(4) Carbon coverage was calculated by the following formula.

$$\text{Carbon coverage} = \text{Carbon content (mass\%)}/\text{BET specific surface area (m}^2\text{/g)}$$

Production Example 1: Preparation of First Material (Ti-containing compound)

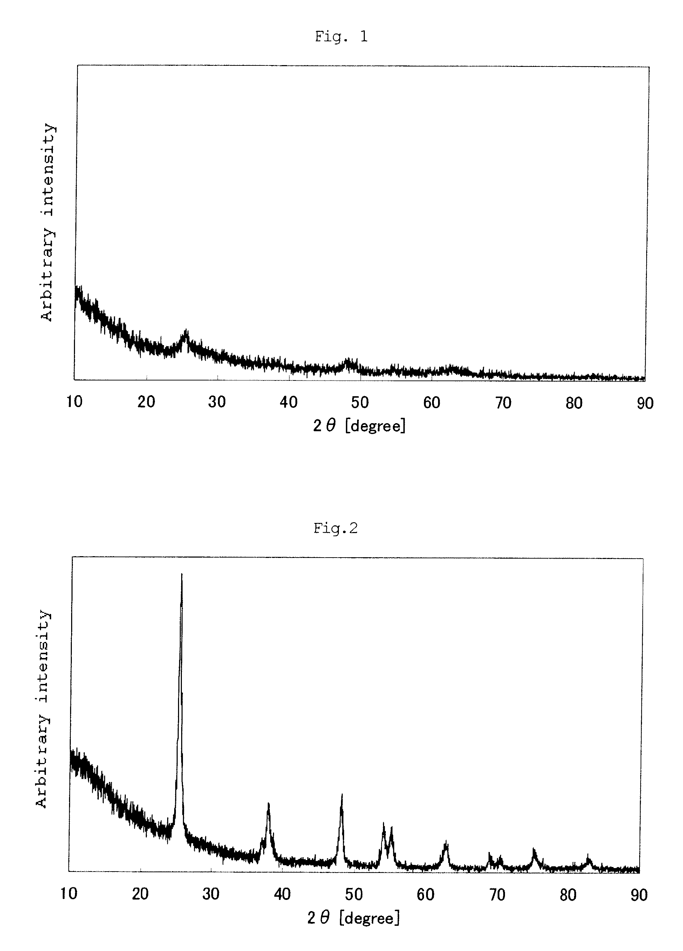

Using an aqueous titanium sulfate (IV) solution (manufactured by Kanto Chemical Co., Ltd., diluted to 12 mass% titanium sulfate) and aqueous $NN_3$ (manufactured by Kanto Chemical Co., Ltd., diluted to 4 mass%), they were neutralized, and the resulting precipitate was filtered and washed to give a first material (Ti-containing compound). Fig. 1 shows the powder X-ray diffraction pattern of the first material. In aqueous $NH_3$ with pH adjusted to 10.5, the first material was dispersed at a concentration of 1 mass% to give a Ti-containing compound slurry.

Production Example 2: Preparation of First Material (Zr-containing compound)

Using an aqueous solution obtained by dissolving zirconium oxychloride (manufactured by Wako Pure Chemical Industries Co., Ltd.) in pure water (8 mass% zirconium oxychloride) and aqueous $NH_3$ (manufactured by Kanto Chemical Co., Ltd., diluted to 4 mass%), they were neutralized, and the resulting precipitate was filtered and washed to give a first material (Zr-containing compound). As a result of powder X-ray diffraction measurement, the first material was identified as zirconium hydroxide. In aqueous $NH_3$ with pH adjusted to 10.5, the first material was dispersed at a concentration of 1 mass% to give a Zr-containing compound slurry.

Production Example 3: Preparation of Second Material (ascorbic acid)

In aqueous $NH_3$ with pH adjusted to 10.5, ascorbic acid (manufactured by Wako Pure Chemical Industries Co., Ltd.) was dissolved at a concentration of 4 mass% to give an aqueous ascorbic acid solution.

Example 1

[Preparation of Electrode Catalyst]

As a first material, the Ti-containing compound slurry obtained in Production Example 1 was used. As a second material, the aqueous ascorbic acid solution obtained in Production Example 3 was used. The Ti-contalning compound slurry and the aqueous ascorbic acid solution each in an amount of 1.25 ml were placed in a 5-cc-volume vessel made of Hastelloy to give a mixture. The vessel was hermetically sealed, then placed in an electric furnace heated to 400°C to create a supercritical state, and heated for 10 minutes with shaking to cause a hydrothermal reaction. After the reaction, cooling was performed, and then drying was performed at 60°C for 3 hours to give a precursor of an electrode catalyst. The precursor was placed in a boat made of alumina. Then, in a 13.4-L-volume tubular electric furnace [manufactured by Motoyama], the temperature was raised from room temperature (around 25°C) to 800°C at a temperature rise rate of 300°C/hour while circulating nitrogen at a flow rate of 1.5 L/minute, and maintained at 800°C for 1 hour to calcine the precursor, thereby giving an electrode catalyst 1. The obtained electrode catalyst 1 was a carbon-coated titanium oxide. The electrode catalyst 1 had a BET specific surface area of 64 $m^2$/g, a carbon content of 14 mass%, and a carbon coverage of 0.2, and its crystal form was tetragonal (anatase). Fig. 2 shows the powder X-ray diffraction pattern of the electrode catalyst.

[Evaluation in Electrochemical System]

The electrode catalyst 1 was weighed in an amount of 0.02 g and added to a mixed solvent of 5 mL of pure water and 5 mL of isopropyl alcohol. The mixture was ultrasonically irradiated to give a suspension. Next, 20 $\mu$L of the suspension was applied to a glassy carbon electrode [6 mm in diameter, electrode area: 28.3 $mm^2$], and dried. Then, 13 $\mu$L of "Nafion®" [manufactured by Du Pont, 10-fold diluted sample with a solid concentration of 5 mass%] was applied thereonto, dried, and further vacuum-dried in a vacuum dryer for 1 hour, thereby giving a modified electrode having an electrode catalyst supported on the glassy carbon electrode. The modified electrode was immersed in a 0.1 mol/L aqueous sulfuric acid solution. At room temperature and atmospheric pressure, under an oxygen atmosphere or a nitrogen atmosphere, the potential was cycled at a scanning rate of 50 mV/s within a scanning range of from minus 0.25 to 0.75 V (0.025 to 1.025 V in terms of reversible hydrogen electrode potential) relative to the silver-silver chloride electrode potential. The current value at each potential was compared between cycles to check electrode stability. As a result, there was no variation in current value within the scanning potential range, and the current value at each potential was stable in every cycle. Further, the current values in an oxygen atmosphere and a nitrogen atmosphere were compared at a potential of 0.4 V relative to the reversible hydrogen electrode potential to determine the oxygen reduction current. As a result, the oxygen reduction current was 1731 $\mu$A/$cm^2$ per unit area of the electrode.

Example 2

[Preparation of Electrode Catalyst]

As a first material, the Ti-containing compound slurry obtained in Production Example 1 was used. The Ti-containing compound slurry in an amount of 1.25 ml and aqueous $NH_3$ with pH adjusted to 10.5 in an amount of 1.25 ml were mixed, and a hydrothermal reaction was carried out in the same manner as in Example 1. After the reaction, cooling was performed, and then drying was performed at 60°C for 3 hours to give a reaction product. The obtained reaction product was mixed with 1.25 ml of the aqueous ascorbic acid solution (second material) in Production Example 3, and evaporated to dryness at 60°C to give a precursor of an electrode catalyst. The precursor was placed in a boat made of alumina, and the precursor was calcined in the same manner as in Example 1 to give an electrode catalyst 2. The obtained electrode catalyst 2 was a carbon-coated titanium oxide. The electrode catalyst 2 had a BET specific surface area of 107 $m^2$/g, a carbon content of 19 mass%, and a carbon coverage of 0.2, and its crystal form was tetragonal (anatase).

[Evaluation in Electrochemical System]

Evaluation in an electrochemical system was performed in the same manner as in Example 1, except that the electrode catalyst 2 was used in place of the electrode catalyst 1. As a result, there was no variation in current value within the scanning potential range, and the current value at each potential was stable every cycle. Further, the current values in an oxygen atmosphere and a nitrogen atmosphere were compared at a potential of 0.4 V relative to the reversible hydrogen electrode potential to determine the oxygen reduction current. As a result, the oxygen reduction current was 514 $\mu$A/cm$^2$ per unit area of the electrode.

Example 3

[Preparation of Electrode Catalyst]

The Ti-containing compound slurry obtained in Production Example 1 and the aqueous ascorbic acid solution obtained in Production Example 3 were weighed so that the volume ratio between the Ti-containing compound slurry and the aqueous ascorbic acid solution was 4:1, and a mixed slurry was thus obtained. The slurry was evaporated to dryness at 60°C to give a precursor of an electrode catalyst. The precursor was placed in a boat made of alumina. In the same manner as in Example 1 except that the temperature was maintained at 900°C, the precursor was calcined to give an electrode catalyst 3. The obtained electrode catalyst 3 was a carbon-coated titanium oxide. The electrode catalyst 3 had a BET specific surface area of 161 m$^2$/g, a carbon content of 19 mass%, and a carbon coverage of 0.1, and its crystal form was tetragonal (anatase).

[Evaluation in Electrochemical System]

Evaluation in an electrochemical system was performed in the same manner as in Example 1, except that the electrode catalyst 3 was used in place of the electrode catalyst 1. As a result, there was no variation in current value within the scanning potential range, and the current value at each potential was stable every cycle. Further, the current values in an oxygen atmosphere and a nitrogen atmosphere were compared at a potential of 0.4 V relative to the reversible hydrogen electrode potential to determine the oxygen reduction current. As a result, the oxygen reduction current was 590 $\mu$A/cm$^2$ per unit area of the electrode.

Example 4

[Preparation of Electrode Catalyst]

As a first material, the Zr-containing compound slurry obtained in Production Example 2 was used. Cellulose was used as a second material. The Zr-containing compound slurry in an amount of 1.79 ml and cellulose in an amount of 150 mg were placed in a 5-cc-volume vessel made of Hastelloy to give a mixture. The vessel was hermetically sealed, then placed in an electric furnace heated to 400°C to create a supercritical state, and heated for 10 minutes with shaking to cause a hydrothermal reaction. After the reaction, cooling was performed, and then drying was performed at 60°C for 3 hours to give a precursor of an electrode catalyst. The precursor was placed in a boat made of alumina. Then, in a 13.4-L-volume tubular electric furnace [manufactured by Motoyama], the temperature was raised from room temperature (around 25°C) to 900°C at a temperature rise rate of 300°C/hour while circulating nitrogen at a flow rate of 1.5 L/min, and maintained at 900°C for 1 hour to calcine the precursor, thereby giving an electrode catalyst 4. The obtained electrode catalyst 4 was a carbon-coated zirconium oxide. The electrode catalyst 4 had a BET specific surface area of 140 m$^2$/g, a carbon content of 44 mass%, and a carbon coverage of 0.3, and its crystal form was tetragonal.

[Evaluation in Electrochemical System]

Evaluation in an electrochemical system was performed in the same manner as in Example 1, except that the electrode catalyst 4 was used in place of the electrode catalyst 1. As a result, there was no variation in current value within the scanning potential range, and the current value at each potential was stable every cycle. Further, the current values in an oxygen atmosphere and a nitrogen atmosphere were compared at a potential of 0.4 V relative to the reversible hydrogen electrode potential to determine the oxygen reduction current. As a result, the oxygen reduction current was 1216 $\mu$A/cm$^2$ per unit area of the electrode.

Comparative Example 1

The Ti-containing compound slurry obtained in Production Example 1 in an amount of 1.25 ml and aqueous NH$_3$ with pH adjusted to 10.5 in an amount of 1.25 ml were mixed, and a hydrothermal reaction was carried out in the same manner as in Example 1. After the reaction, cooling was performed, and then drying was performed at 60°C for 3 hours to give an anatase titanium oxide (BET specific surface area: 71 m$^2$/g). Evaluation in an electrochemical system was performed in the same manner as in Example 1, except that the anatase titanium oxide was used in place of the electrode catalyst 1. The current values in an oxygen atmosphere and a nitrogen atmosphere were compared at a potential of 0.4 V relative to the reversible hydrogen electrode potential to determine the oxygen reduction current. As a result, the oxygen reduction current was 3 $\mu$A/cm$^2$ per unit area of the electrode.

Comparative Example 2

The Zr-containing compound slurry obtained in Production Example 2 in an amount of 1.79 ml was placed in a 5-cc-volume vessel made of Hastelloy. The vessel was hermetically sealed, and then heated in a supercritical state at 400°C for 10 minutes to cause a hydrothermal reaction. After the reaction, cooling was performed, and then drying was performed at 60°C for 3 hours to give a zirconium oxide powder. Evaluation in an electrochemical system was performed in the same manner as in Example 1, except that the zirconium oxide powder was used in place of the electrode catalyst 1. The current values in an oxygen atmosphere and a nitrogen atmosphere were compared at a potential of 0.4 V relative to the reversible hydrogen electrode potential to determine the oxygen reduction current. As a result, the oxygen reduction current was 15 $\mu$A/cm$^2$ per unit area of the electrode.

Comparative Example 3

Evaluation in an electrochemical system was performed in the same manner as in Example 1, except that a commercially available zirconium oxide powder (manufactured by Daiichi Kigenso Kagaku Kogyo Co., Ltd., RC-100, carbon content: 0%, BET specific surface area: 106 m$^2$/g, carbon coverage: 0) was used in place of the electrode catalyst 1. The current values in an oxygen atmosphere and a nitrogen atmosphere were compared at a potential of 0.4 V relative to the reversible hydrogen electrode potential to determine the oxygen reduction current. As a result, the oxygen reduction current was 1.5 $\mu$A/cm$^2$ per unit area of the electrode.

## INDUSTRIAL APPLICABILITY

According to the present invention, an electrode catalyst that can be used in an acidic electrolyte even at high potential and shows high activity can be obtained. Further, an electrode catalyst can be obtained using a material which is relatively inexpensive and whose resources are relatively abundant, and, therefore, the present invention is industrially extremely useful.

## Claims

1. A method for producing an electrode catalyst, comprising a step of calcining a precursor of the electrode catalyst under conditions under which a second material defined below can change into a carbonaceous material, the precursor having been obtained by hydrothermally reacting a mixture containing a first material defined below and the second material defined below in the presence of supercritical or subcritical water, wherein
the first material is defined to be a metal compound composed of one or more metal elements selected from the group consisting of the elements of Group 4A and the elements of Group 5A and one or more non-metal elements selected from the group consisting of hydrogen, nitrogen, chlorine, carbon, boron, sulfur, and oxygen, and
the second material is defined to be a precursor of a carbonaceous material.

2. A method for producing an electrode catalyst, comprising a step of calcining a precursor of the electrode catalyst under conditions under which a second material defined below can change into a carbonaceous material, the precursor having been obtained by mixing a reaction product having been obtained by hydrothermally reacting a first material defined below in the presence of supercritical or subcritical water and the second material defined below, wherein
the first material is defined to be a metal compound composed of one or more metal elements selected from the group consisting of the elements of Group 4A and the elements of Group 5A and one or more non-metal elements selected from the group consisting of hydrogen, nitrogen, chlorine, carbon, boron, sulfur, and oxygen, and
the second material is defined to be a precursor of a carbonaceous material.

3. The method according to claim 1 or 2, wherein the metal element in the first material is Zr or Ti.

4. The method according to any one of claims 1 to 3, wherein an atmosphere of the calcination is an oxygen-free atmosphere.

5. An electrode catalyst obtained by the method according to any one of claims 1 to 4.

6. An electrode catalyst composed of a metal compound comprising titanium and oxygen and a carbonaceous material coating at least a part of a surface of the compound and having a BET specific surface area of 15 $m^2$/g or more and 500 $m^2$/g or less.

7. The electrode catalyst according to claim 6, wherein the metal compound comprising titanium and oxygen atoms is a titanium oxide.

8. An electrode catalyst composition comprising the electrode catalyst according to any one of claims 5 to 7.

Fig. 1

$2\theta$ [degree]

Fig.2

$2\theta$ [degree]

## INTERNATIONAL SEARCH REPORT

| International application No. |
| --- |
| PCT/JP2010/055491 |

A.   CLASSIFICATION OF SUBJECT MATTER
*B01J21/18*(2006.01)i, *C25B11/06*(2006.01)i, *H01M4/88*(2006.01)n, *H01M4/90*(2006.01)n, *H01M8/10*(2006.01)n

According to International Patent Classification (IPC) or to both national classification and IPC

B.   FIELDS SEARCHED

Minimum documentation searched (classification system followed by classification symbols)
B01J21/18, C25B11/06, H01M4/88, H01M4/90, H01M8/10

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
WPI, JSTPlus(JDreamII)

C.   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2005-194148 A  (Tohoku Techno Arch Co., Ltd.),<br>21 July 2005 (21.07.2005),<br>paragraphs [0013], [0014], [0019]; examples 9, 13, 14; tables 7, 8<br>& US 2010/0092663 A1 | 1-5,8<br>6,7 |
| X<br>Y | JP 50-136307 A  (Exxon Research & Engineering Co.),<br>29 October 1975 (29.10.1975),<br>example 1; tables I, II<br>& US 3964933 A           & GB 1484208 A<br>& DE 2513078 A1          & FR 2266956 A1 | 6-8<br>1-5,8 |

☒   Further documents are listed in the continuation of Box C.          ☐   See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    18 June, 2010 (18.06.10) | Date of mailing of the international search report<br>    29 June, 2010 (29.06.10) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/055491 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2006-198570 A (Sumitomo Chemical Co., Ltd.), 03 August 2006 (03.08.2006), paragraphs [0018], [0020] (Family: none) | 1-5,8 |
| Y | REINHARDT, D. et al, Special titanium dioxide layers and their electrochemical behaviour, Electrochimica Acta, 2006.11.12, Vol.52, No.3, p.825-830, doi:10.1016/j.electacta.2006.06.016 | 1-5,8 |
| Y | Satoshi OHARA et al., "Cho Rinkaisui o Mochiita Nano Ryushi Seizo", Function & materials, 05 December 2006 (05.12.2006), vol.27, no.1, pages 22 to 26, ISSN:0286-4835 | 2,4 |
| Y | HAYASHI, H. et al, Hydrothermal synthesis of titania photocatalyst under subcritical and supercritical water conditions, Journal of Materials Chemistry, 2002.12, Vol.12, No.12, p.3671-3676, doi:10.1039/b207052a | 2,4,6-8 |
| Y A | JP 2003-221217 A (Canon Inc.), 05 August 2003 (05.08.2003), paragraphs [0039], [0040] & US 2003/0086859 A1  & EP 1300364 A2 & KR 10-2003-0029035 A  & CN 1429767 A | 4 1-3 |
| Y | WO 2004/113251 A1 (Matsushita Electric Industrial Co., Ltd.), 29 December 2004 (29.12.2004), page 17, line 15 to page 18, line 3 & US 2005/0215068 A1  & US 2007/0256735 A1 & CN 1809516 A  & CN 101219401 A | 4 |
| A | JP 2007-175578 A (Asahi Kasei Corp.), 12 July 2007 (12.07.2007), entire text (Family: none) | 1-8 |
| A | US 2004/0058808 A1 (CHANGCHUN INSTITUTE OF APPLIED CHEMISTY CHINESE ACADEMY OF SCIENCE), 25 March 2004 (25.03.2004), entire text & CN 1387274 A | 1-8 |
| P,A | LI, X. et al, Development of durable carbon black/titanium dioxide supported macrocycle catalysts for oxygen reduction reaction, Journal of Power Sources, 2009.09.05, Vol.193, No.2, p.470-476, doi:10.1016/j.jpowsour.2009.04.007 | 1-8 |

Form PCT/ISA/210 (continuation of second sheet) (July 2009)

**INTERNATIONAL SEARCH REPORT**

| | International application No. |
|---|---|
| | PCT/JP2010/055491 |

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2009-298602 A (Sumitomo Chemical Co., Ltd.), 24 December 2009 (24.12.2009), entire text (Family: none) | 1-8 |

Form PCT/ISA/210 (continuation of second sheet) (July 2009)

| INTERNATIONAL SEARCH REPORT | International application No. |
|---|---|
| | PCT/JP2010/055491 |

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
The invention in claim 1, the invention in claim 2 and the invention in claim 6 have a common technical feature such as "electrode catalyst con figured from a metal compound containing titanium and oxygen and a carbon material". However, the above-said technical feature is described in the document 2, and therefore, the technical feature cannot be considered to have a novelty and a special technical feature.

(continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2010/055491

Continuation of Box No.III of continuation of first sheet(2)

Furthermore, there is no other same or corresponding special technical feature among those inventions. Consequently, the inventions do not satisfy the requirement of unity.
The invention in the following claims is relevant to main invention.
Claims 1, 3 - 5, 8

Document 2: JP 50-136307 A (Exxon Research & Engineering Co.),
29 October 1975 (29.10.1975)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Hiroshi Yoneyama et al.** *Denkikagaku (Electrochemistry),* 1973, vol. 41, 719

- **Yan Liu et al.** *Electrochemical and Solid-State Letters,* 2005, vol. 8 (8), A400-402